# EUROPÄISCHE PATENTSCHRIFT

(11) **EP 3 606 870 B1**
(45) Veröffentlichungstag und Bekanntmachung des Hinweises auf die Patenterteilung: **03.03.2021**
(21) Anmeldenummer: 18713901.9
(22) Anmeldetag: 27.03.2018
(51) Int. Cl.: C01B 3/02, C01C 1/04

(54) **VERFAHREN ZUM HERSTELLEN VON SYNTHESEGAS SOWIE SYNTHESEGAS-KÜHLUNGSANORDNUNG UND VERWENDUNG**
METHOD FOR PRODUCING SYNGAS, AS WELL AS SYNGAS COOLING ASSEMBLY AND USE
PROCÉDÉ POUR LA PRODUCTION DE GAZ DE SYNTHÈSE AINSI QUE DISPOSITIF DE REFROIDISSEMENT DE GAZ DE SYNTHÈSE ET UTILISATION

(30) Priorität: 05.04.2017 DE 102017205780
(43) Veröffentlichungstag der Anmeldung: 12.02.2020
(73) Patentinhaber: thyssenkrupp Industrial Solutions AG, 45143 Essen (DE); thyssenkrupp AG, 45143 Essen (DE)
(72) Erfinder: TENBRINK, Norbert, 44328 Dortmund (DE); BERGER, Maximilian, 44267 Dortmund (DE)
(74) Vertreter: thyssenkrupp Intellectual Property GmbH
(86) Internationale Anmeldenummer: PCT/EP2018/057712
(87) Internationale Veröffentlichungsnummer: WO 2018/184903

(56) Entgegenhaltungen:
- EP-A2- 0 860 673
- WO-A1-2009/070189
- US-A- 3 441 393
- US-A1- 2004 042 951
- US-A1- 2010 132 259
- Dennis Lippmann ET AL: "Uhde dual-pressure process for large-scale ammonia plants", ThyssenKrupp techforum, 1. Juli 2004 (2004-07-01), Seiten 56-61, XP55385465, Gefunden im Internet: URL:https://www.thyssenkrupp-industrial-so lutions.com/media/download_1/ammonia_2/uhd e_publications_pdf_en_5000002.pdf [gefunden am 2017-06-27]
- Fred Kessler ET AL: "First application of Uhde?s dual pressure ammonia process for revamping the Duslo ammonia plant", , 1. Januar 2006 (2006-01-01), XP55385421, Gefunden im Internet: URL:https://www.thyssenkrupp-industrial-so lutions.com/en/download?p=2F0338C5054E9641 4459FD038D54FD5EE705A757DB9077176D7547904D 46C17574BDFC264FF8F766E4E218243B37B80E1C47 5AB950A67257A2656D37E48780CB9F4A53477B1AB4 EABE829002075215F1395F6681DF0F90B32ABA64B6 B1DE1E03D3CB7226D7B4DB2C2A88C88D20190EF6 [gefunden am 2017-06-27]

## Beschreibung

### TECHNISCHES GEBIET

Die Erfindung betrifft eine Synthesegas-Kühlungsanordnung zum Kühlen von Synthesegas in einem ersten von zwei Syntheseabschnitten mit relativ niedrigerem Hochdruckniveau einer Zweidruckniveau-Ammoniakanlage, sowie ein Verfahren zum Herstellen von Synthesegas bei dieser Art von Kühlung. Ferner ist die Verwendung von Kühlmedium betroffen, insbesondere auch die Verwendung von wenigstens einer Anlagenkomponente zum Bereitstellen oder zum Nutzen des Kühlmediums. Insbesondere betrifft die Erfindung eine Anordnung und ein Verfahren gemäß dem Oberbegriff des jeweiligen Anspruchs.

### HINTERGRUND

Eine Zweidruckniveau-Ammoniakanlage bzw. ein Zweidruckniveau-Ammoniakprozess wird aus zwei Syntheseabschnitten gebildet, nämlich dem klassischen Abschnitt mit zwei Loop-Reaktoren, die bei einem Druck von ca. 200 bar betrieben werden, und dem so genannten Once Through (OT)-Abschnitt, der einen auf ca. 100 bar betriebenen Reaktor umfasst, also auf deutlich niedrigerem Druckniveau. Der Loop-Abschnitt wird als Synthesekreislauf betrieben, und der OT-Abschnitt wird nur einmal durchlaufen. Eine solche Anlagekonfiguration ist insbesondere unter der Bezeichnung "Dual Pressure Ammonia Process" bekannt. Synthesegas bzw. Ammoniak kann parallel auf zwei Druckniveaus erzeugt werden. Einer der Vorteile ist eine besonders hohe Produktionsleistung, insbesondere größer 3000 Tonnen Ammoniak pro Tag.

In jedem Syntheseabschnitt muss eine Wärmeabfuhr erfolgen. Die Wärmeabfuhr im ersten OT-Syntheseabschnitt (niedrigeres Druckniveau) stromab vom OT-Reaktor erfolgt üblicherweise durch Wärmeaustausch mit Hochdruck-Kesselspeisewasser (BFW) auf einem vergleichsweise hohen Wärmetauscher-Druckniveau von ca. 140 bar in einem so genannten BFW-Vorwärmer. Zur Wärmeabfuhr während der exothermen Ammoniakreaktion im zweiten Loop-Syntheseabschnitt (höheres Druckniveau) wird zwischen den beiden Reaktoren Hochdruckdampf auf ca. 125 bar erzeugt.

Die folgenden Veröffentlichungen beschreiben Verfahren und Anlagen im Zusammenhang mit dem Bereitstellen von Synthesegas oder im Zusammenhang mit Konverter- oder Reaktor-Anordnungen: US2010/0132259A1, US3441393A, DE3600432A1, EP0860673A2, WO2009/070189 A1 und Dennis Lippmann ET AL: "Uhde dual-pressure process for large-scale ammonia plants", ThyssenKrupp techforum, 1. Juli 2004 (2004-07-01), Seiten 56-61.

Im Zusammenhang mit kontinuierlichen Bestrebungen, die Anlagenkonfiguration weiter zu optimieren und insbesondere die Ausbeute, energetische Effizienz oder auch die Produktionsleistung noch weiter zu erhöhen, kann es gewünscht oder erforderlich sein, zusätzliche Anlagenkomponenten vorzusehen oder bestehende Anlagenkomponenten neu zu konfigurieren. Da die einzelnen Anlagenkomponenten miteinander interagieren, ist eine Abwandlung der bestehenden Konfiguration einer Zweidruckniveau-Ammoniakanlage jedoch nicht auf einfache Weise möglich. Insbesondere muss dabei die Frage geklärt werden, auf welche Weise eine ausreichende Kühlung erfolgen kann, insbesondere auch stromab vom OT-Reaktor.

### BESCHREIBUNG DER ERFINDUNG

Aufgabe der Erfindung ist es, eine Synthesegas-Kühlungsanordnung und ein Verfahren mit den eingangs beschriebenen Merkmalen bereitzustellen, womit Synthesegas im OT-Syntheseabschnitt auf vorteilhafte Weise behandelt werden kann. Die Aufgabe kann auch darin gesehen werden, den OT-Syntheseabschnitt auf vorteilhafte Weise mit weiteren Anlagenkomponenten zu verknüpfen. Insbesondere besteht die Aufgabe auch darin, das Kühlen von Synthesegas im OT-Syntheseabschnitt beim Herstellungsprozess in einer Zweidruckniveau-Ammoniakanlage auf effiziente und betriebssichere Weise zu bewerkstelligen, insbesondere bei möglichst hoher anlagentechnischer Flexibilität.

Diese Aufgabe wird erfindungsgemäß gelöst durch ein Verfahren zum Herstellen von Synthesegas in einer Zweidruckniveau-Ammoniakanlage mit einem ersten im Durchlauf ("once through" OT) betriebenen Syntheseabschnitt auf einem ersten, relativ niedrigeren Hochdruckniveau und mit einem zweiten im Kreislauf betriebenen Syntheseabschnitt auf einem zweiten relativ höheren Hochdruckniveau, wobei das Synthesegas im ersten Syntheseabschnitt stromab von einem OT-Reaktor des ersten Syntheseabschnittes mittels Kühlmedium auf einem Druckniveau unterhalb des ersten Hochdruckniveaus gekühlt wird, insbesondere auf einem Druckniveau im Bereich von 50 bis 75 bar. Dies liefert hohe energetische Effizienz und eine gute Ausbeute bei der Synthese. Ein großer Vorteil ist dabei auch die hohe Betriebssicherheit. Ein Risiko, dass Kühlmedium in den ersten Syntheseabschnitt gelangt, kann effektiv verringert oder komplett eliminiert werden. Insbesondere kann das Kühlen von Synthesegas im ersten Syntheseabschnitt auf sehr effiziente Weise erfolgen, bei gleichzeitig hoher Betriebssicherheit und energetischen Vorteilen. Dadurch ergeben sich auch neue, wirtschaftlich oder energetisch vorteilhafte Anlagen-Konfigurationen. Das erste Hochdruckniveau ist dabei relativ zum zweiten Hochdruckniveau niedriger, beispielsweise um 50%, also z.B. im Verhältnis ca. 100bar zu ca. 200bar.

Gemäß einer Ausführungsform wird das Kühlmedium als Dampf bereitgestellt, insbesondere erzeugt aus Kesselspeisewasser. Dies ermöglicht vorteilhafte Prozess- und Anlagen-Konfigurationen.

Dabei kann mittels des Mitteldruckdampferzeugers aus Kesselspeisewasser Dampf erzeugt werden, insbesondere indem während der Kühlung von Synthesegas durch indirekten Wärmeübergang im Mitteldruckdampferzeuger Wärme auf das Kesselspeisewasser übertragen wird, bis das Kesselspeisewasser eine Phasenumwandlung von flüssig zu gasförmig vollzieht.

Gemäß einer Ausführungsform erfolgt der Wärmetausch durch zumindest teilweisen Phasenwechsel des Kühlmediums von flüssig zu gasförmig. Hierdurch kann Dampf bereitgestellt werden, der stromab noch in der Anlage genutzt werden kann.

Gemäß einer Ausführungsform wird das Synthesegas im ersten Syntheseabschnitt nach dem Kühlen zu wenigstens einem weiteren OT-Reaktor des ersten Syntheseabschnittes geleitet. Dies kann insbesondere auch die Ammoniak-Ausbeute erhöhen.

Erfindungsgemäß wird das Kühlmedium mittels eines Mitteldruckdampferzeugers auf einem Druckniveau unterhalb des ersten Hochdruckniveaus bereitgestellt, oder das Kühlen erfolgt mittels des Mitteldruckdampferzeugers. Hierdurch ergeben sich zahlreiche verfahrens- und anlagentechnische Vorteile, insbesondere sowohl hinsichtlich Betriebssicherheit, als auch hinsichtlich energetischer Aspekte.

Gemäß einer Ausführungsform wird das Kühlmedium an oder mittels eines Mitteldruckdampferzeugers umfassend wenigstens eine Zweiphasen-Wärmetauschereinrichtung bereitgestellt, welche stromauf vom/von einem weiteren OT-Reaktor von Synthesegas durchströmt wird, insbesondere Kühlmedium erzeugt aus Kesselspeisewasser. Hierdurch lässt sich ein Prozess realisieren, der gut in bestehende Anlagenkonfigurationen eingebunden werden kann. Die Wärmetauschereinrichtung ist bevorzugt auch eingerichtet zur Dampferzeugung. Die Wärmetauschereinrichtung kann auch die Funktion eines Mitteldruckdampferzeugers erfüllen.

Dabei kann ein Wärmetausch in einer Wärmetauschereinrichtung mittels Kühlmedium auf einem Druckniveau unterhalb des Druckniveaus des ersten Syntheseabschnittes erfolgen. Dabei kann Kühlmedium zwischen dem ersten und dem zweiten oder einem weiteren OT-Reaktor des ersten Syntheseabschnittes derart durch die Wärmetauschereinrichtung geleitet werden, dass gekühltes Synthesegas am zweiten OT-Reaktor bereitgestellt werden kann. Wahlweise kann auch ein dritter oder vierter OT-Reaktor vorgesehen sein. Die Ammoniak-Ausbeute wird mit jeder OT-Reaktor-Stufe zwar geringer, jedoch kann es je nach Art des Prozesses die absolute Ausbeute erhöhen und auch die Anlagenflexibilität steigern.

Auch kann ein weiterer Mitteldruckdampferzeuger vorgesehen sein, insbesondere zwischen einem zweiten und einem dritten OT-Reaktor. Es hat sich gezeigt, dass das Temperaturniveau am Austritt aus einem OT-Reaktor thermodynamisch besonders gut für die Vorwärmung von Hochdruck-Kesselspeisewasser genutzt werden kann.

Insbesondere kann das Kühlen mittels aus Kesselspeisewasser der Ammoniakanlage erzeugtem Mitteldruckdampf in einer zwischen den OT-Reaktoren angeordneten Wärmetauschereinrichtung erfolgen, beispielsweise bei einem Druck von 50 bis 75 bar.

Der Mitteldruckdampf kann erzeugt werden, ohne dass danach eine Überhitzung stattfinden muss. Der Mitteldruckdampf kann Sattdampf bleiben, insbesondere zur Verwendung in einem Prozesskondensatstripper. Dadurch kann auch der Bedarf des Prozesskondensatstrippers an überhitztem Mitteldruckdampf von einer Mitteldruckdampfschiene reduziert werden.

In der Wärmetauschereinrichtung kann ein Wärmeübergang von heißem Synthesegas auf kälteres Kesselspeisewasser erfolgen. Das Kesselspeisewasser verdampft dabei, und es entsteht Mitteldruckdampf. Die Wärmetauschereinrichtung und der Mitteldruckdampferzeuger können wahlweise durch dieselbe Anlagenkomponente bereitgestellt werden.

Gemäß einer Ausführungsform wird das Kühlmedium nach erfolgtem Wärmetausch am Synthesegas zu einem Prozesskondensatstripper der Ammoniakanlage geleitet. Hierdurch kann der Bedarf an Dampf zumindest teilweise durch das Kühlen des Synthesegases gedeckt werden.

Gemäß einer Ausführungsform wird mittels des Mitteldruckdampferzeugers aus Kesselspeisewasser Dampf erzeugt, indem während der Kühlung von Synthesegas im Mitteldruckdampferzeuger Wärme auf das Kesselspeisewasser übertragen wird.

Gemäß einer Ausführungsform wird das Kühlmedium nach erfolgtem Wärmetausch am Synthesegas zu einem Primärreformer der Ammoniakanlage geleitet. Hierdurch kann auch die Effizienz und Wirtschaftlichkeit der Anlage optimiert werden.

Gemäß einer Ausführungsform wird das Kühlmedium durch Kesselspeisewasser der Ammoniakanlage bereitgestellt und in einem Mitteldruckdampferzeuger zumindest teilweise in vergleichsweise trockenen Dampf zur Weiterverwendung in der Anlage umgewandelt. Dies liefert auch eine effiziente Anlagenkonfiguration bzw. einen in die gesamte Anlage vorteilhaft integrierbaren Prozess.

Bei einer Dampferzeugung kann, je nach Zusammensetzung des zugeführten Kühlmediums, eine Abschlämmung (blow down) vorgesehen werden, insbesondere um zu vermeiden, dass sich nicht verdampfbare Bestandteile des Kesselspeisewassers (wie z.B. Schmieröl aus der Kesselspeisewasserpumpe oder Ablagerungen aus Rohrleitungen) im Sumpf des Dampferzeugers anreichern und den Wärmeübergang behindern. Abschlämmflüssigkeit (blow down) aus dem Sumpf des Mitteldruckdampferzeugers kann zu einem Kondensatbehälter geleitet und in diesem geflasht werden, um noch vorhandene Energie für die Erzeugung von Niederdruckdampf zu nutzen. Auch dies trägt zu einem energieeffizienten Anlagenkonzept bei.

Gemäß einer Ausführungsform wird entspanntes Kühlmedium oder Kühlmedium zur Entspannung aus dem ersten Syntheseabschnitt zu einem Kondensatbehälter der Ammoniakanlage abgeleitet, insbesondere stromab vom/von einem Mittedruckdampferzeuger. Dies ermöglicht die Abfuhr von Abschlämmflüssigkeit (blow down).

Eine Logikeinheit eingerichtet zum Ausführen eines zuvor beschriebenen Verfahrens, wobei die Logikeinheit eingerichtet ist zum Überwachen oder Regeln des Drucks des Kühlmediums auf einem Niveau unterhalb des Drucks des ersten Syntheseabschnittes, ist dargelegt. Hiermit können einzelne Prozessparameter überwacht und geregelt werden.

Die zuvor genannte Aufgabe wird erfindungsgemäß auch gelöst durch eine Synthesegas-Kühlungsanordnung zur Wärmeabfuhr aus Synthesegas in einem ersten von zwei Syntheseabschnitten mit relativ niedrigerem Hochdruckniveau einer Zweidruckniveau-Ammoniakanlage, insbesondere eingerichtet zum Durchführen eines zuvor beschriebenen Verfahrens, wobei die Kühlungsanordnung eingerichtet ist zum Bereitstellen von Kühlmedium auf einem Druckniveau unterhalb des Hochdruckniveaus des ersten Syntheseabschnittes, insbesondere bei einem Druck kleiner 80 oder 75 Prozent des Hochdruckniveaus des ersten Syntheseabschnittes, und wobei die Synthesegas-Kühlungsanordnung (10) wenigstens zwei Ableitungen umfassend eine Ableitung für das Kühlmedium zu einem Prozesskondensatstripper der Ammoniakanlage und umfassend eine Ableitung für das Kühlmedium zu einem Kondensatbehälter der Ammoniakanlage aufweist. Dies liefert zuvor genannte Vorteile.

Gemäß einem Ausführungsbeispiel ist die Kühlungsanordnung eingerichtet zum Bereitstellen des Kühlmediums in Dampfform. Dies liefert zuvor genannte Vorteile.

Gemäß einem Ausführungsbeispiel ist die Kühlungsanordnung eingerichtet zum Bereitstellen des Kühlmediums stromab von einem ersten OT-Reaktor des ersten Syntheseabschnittes und stromauf von einem zweiten OT-Reaktor des ersten Syntheseabschnittes. Dies liefert zuvor genannte Vorteile.

Erfindungsgemäß umfasst die Synthesegas-Kühlungsanordnung einen Mitteldruckdampferzeuger zum Bereitstellen des Kühlmediums, insbesondere einen Mitteldruckdampferzeuger umfassend wenigstens eine Zweiphasen-Wärmetauschereinrichtung. Dies liefert zuvor genannte Vorteile.

Das Kühlmedium kann als Mitteldruckdampf MPS bereitgestellt werden, insbesondere Mitteldruckdampf erzeugt aus Kesselspeisewasser BFW der Ammoniakanlage. Hierdurch ergeben sich anlagen- und prozesstechnische Vorteile.

Die Anordnung kann wenigstens eine vom Synthesegas des ersten Syntheseabschnittes durchströmbare Wärmetauschereinrichtung mit Kühlmedium auf einem Druckniveau unterhalb des Hochdruckniveaus des ersten Syntheseabschnittes umfassen, insbesondere bei einem Druck kleiner 80 oder 75 Prozent des Hochdruckniveaus des ersten Syntheseabschnittes. Dies ermöglicht eine betriebssichere Konfiguration auch mit weiteren Anlagenkomponenten stromab von der Wärmetauschereinrichtung.

Der Mitteldruckdampferzeuger kann als Zweiphasen-Wärmetauschereinrichtung ausgebildet sein oder umfasst wenigstens eine Zweiphasen-Wärmetauschereinrichtung. Dies ermöglicht z.B. auch, mehrere Zweiphasen-Wärmetauschereinrichtungen jeweils mit einem OT-Reaktor interagieren zu lassen.

Als eine Zweiphasen-Wärmetauschereinrichtung ist dabei eine Wärmetauschereinrichtung zu verstehen, bei welcher das Kühlmedium in wenigstens zwei Phasen, insbesondere flüssig und gasförmig vorliegt, oder bei welcher eine Phasenumwandlung in die oder aus der Gasphase erfolgt. Unabhängig davon können das Kühlmedium und das zu kühlende Medium unterschiedliche Phasen aufweisen.

Das Kühlmedium kann im Mitteldruckdampferzeuger, insbesondere in der Zweiphasen-Wärmetauschereinrichtung zumindest teilweise in Dampfform vorliegen, insbesondere erzeugt aus Kesselspeisewasser. Dies liefert zuvor genannte Vorteile.

Die Synthesegas-Kühlungsanordnung kann insbesondere zwei Ammoniaksynthesekonverter umfassen, zwischen welchen eine Gaskühlung und eine Dampferzeugung erfolgt. Das Synthesegas ist dabei bevorzugt ein vollständig aufbereitetes Synthesegas, insbesondere in einem für die Ammoniaksynthese optimalen stöchiometrischen Verhältnis.

Gemäß einem Ausführungsbeispiel ist die Zweiphasen-Wärmetauschereinrichtung stromab von einem ersten OT-Reaktor des ersten Syntheseabschnittes und stromauf von einem zweiten OT-Reaktor des ersten Syntheseabschnittes angeordnet/anordenbar. Dies ermöglicht nicht zuletzt eine hohe Ammoniak-Ausbeute.

Aus diversen Gründen kann es gewünscht sein, einen bestehenden ersten Syntheseabschnitt umfassend lediglich einen OT-Reaktor um wenigstens einen weiteren OT-Reaktor zu erweitern. Es hat sich gezeigt, dass mittels zwei in Reihe geschalteten OT-Reaktoren die Produktionskapazität im Bereich von 10% erhöht werden kann.

Bei der Erweiterung eines bestehenden ersten Syntheseabschnittes um einen zweiten OT-Reaktor kann aufgrund des niedrigen Prozessdrucks im ersten Syntheseabschnitt kein BFW-Vorwärmer zwischen den OT-Reaktoren verwendet werden. Das BFW kann oder soll - im Gegensatz zur im ersten Syntheseabschnitt gewählten Konfiguration - für den Wärmeaustausch nicht genutzt werden. Insbesondere muss vermieden werden, dass bedingt durch höheren Druck des BFWs im Falle einer Rohrleckage im BFW-Vorwärmer Wasser auf einen im zweiten OT-Reaktor vorgesehenen NH3-Katalysator gelangen und diesen deaktivieren würde. Insbesondere dieses Risiko begründet, dass das Kühlen des Synthesegases in einem BFW-Vorwärmer nur stromab von einem OT-Reaktor erfolgen kann.

Die Druckdifferenz zwischen BFW-Druck und erstem Syntheseabschnitt ist zu groß als dass die Verwendung des BFW als Kühlmedium zweckdienlich wäre oder sich anlagentechnisch sinnvoll realisieren ließe. Daher kann der BFW-Druck stromauf von der Kühlungsanordnung auf ein entsprechendes Niveau, beispielsweise 50 bis 75 bar geregelt werden, insbesondere in einer Durchlassarmatur, so dass die Verwendung des BFW als Kühlmedium kein Risiko darstellt. Eine etwaige Leckage würde in der Folge nur dazu führen, dass Synthesegas auf die Dampfseite gelangt.

Anstelle eines auf hohem Druck deutlich über dem Prozessdruck des ersten Syntheseabschnittes betriebenen BFW-Vorwärmers kann Mitteldruckdampf auf einem Druckniveau erzeugt werden, welches unterhalb vom Prozessdruck des ersten Syntheseabschnittes liegt, beispielsweise mit einem Druck von ca. 50 bis 75 bar. Dieser Mitteldrucksattdampf mag zwar in vielen Anlagenkonfigurationen nicht auf besonders effiziente Weise zum Antrieb von z.B. Turbinen genutzt werden, eignet sich aber zur Verwendung in einem Prozesskondensatstripper bzw. Mitteldruckkondensatstripper. Der erzeugte Dampf kann letztlich auch als Prozessdampf in einem Primärreformer der Anlage genutzt werden.

Eine etwaige Leckage in einem Mitteldruckdampferzeuger würde also bewirken, dass Synthesegas auf die Mitteldruckdampfseite der Wärmetauscheranordnung gelangt. Durch die Wahl der Druckverhältnisse kann trotz Leckage in dieser Anordnung ein Stofftransport in umgekehrter Richtung jedoch verhindert werden. Somit kann eine Belastung des jeweiligen OT-Reaktors und insbesondere eine Beeinträchtigung von Katalysatormaterial ausgeschlossen werden.

Es hat sich gezeigt, dass es besonders vorteilhaft ist, den Mitteldruckdampferzeuger bzw. die Wärmetauschereinrichtung vertikal ("stehend") auszurichten, also mit vertikal ausgerichtetem Rohrbündel und Druckbehälter. Dies liefert eine effektive Phasentrennung. Die Bauhöhe kann genutzt werden, um aufgrund von Dichteunterschieden und Gravitation eine umfassende Phasentrennung sicherzustellen. Dies ermöglicht, vergleichsweise trockenen Dampf bereitzustellen, ohne zusätzlichen Flüssigkeitsabscheider.

Der klassische zweite Syntheseabschnitt kann insbesondere bei einem Druck von ca. 200 bar betrieben werden. Der erste (OT)-Syntheseabschnitt wird insbesondere auf ca. 100 bar betrieben. Der Mitteldruckdampf kann auf einem Niveau unterhalb von jenem des Prozessdrucks des ersten Syntheseabschnitts bereitgestellt werden, beispielsweise bei ca. 50 bis 75 bar, entsprechend also beispielsweise maximal 75 Prozent des Drucks des ersten Syntheseabschnittes. Der Mitteldruckdampf kann insbesondere anstelle von Kühlmedium eines auf hohem Druck betriebenen BFW-Vorwärmers genutzt werden.

Nach erfolgtem Wärmetausch entspannter Dampf des Mitteldruckdampferzeugers kann zu einem Kondensatbehälter geführt werden, insbesondere um darin Niederruckdampf zu gewinnen (flash).

Als OT-Reaktor ist dabei ein "Once Through"-Reaktor zu verstehen, also eine einfach durchlaufene Anlagenkomponente bzw. ein einfach durchlaufener Syntheseabschnitt, insbesondere vor dem Synthesekreislauf einer Zweidruck-Ammoniakanlage angeordnet.

Gemäß einem Ausführungsbeispiel weist die Kühlungsanordnung einen in Reihe stromauf von einem Prozesskondensatstripper der Ammoniakanlage anordenbaren/angeordneten und an den Prozesskondensatstripper koppelbaren/gekoppelten Mitteldruckdampferzeuger auf, insbesondere anordenbar/angeordnet stromab von einer Kesselspeisewasserpumpe der Ammoniakanlage. Diese Art der Anordnung ermöglicht ein vorteilhaftes Anlagenkonzept, auch in energetischer Hinsicht.

Der Mitteldruckdampferzeuger weist eine innere Vorwärmzone auf, so dass das Kesselspeisewasser nicht notwendigerweise siedend zugeführt werden muss. Mitteldruckdampf (Sattdampf) kann in wenigstens einem Wärmetauscher erzeugt werden, um daraufhin ohne Überhitzung insbesondere auch im Prozesskondensatstripper verwendet zu werden.

Zusammengefasst kann die Synthesegas-Kühlungsanordnung wenigstens einen vom Synthesegas des ersten Syntheseabschnittes durchströmbaren Mitteldruckdampferzeuger umfassen, wobei der Mitteldruckdampferzeuger als Zweiphasen-Wärmetauschereinrichtung ausgebildet ist oder wenigstens eine Zweiphasen-Wärmetauschereinrichtung umfasst, und wobei das Kühlmedium im Mitteldruckdampferzeuger, insbesondere in der Zweiphasen-Wärmetauschereinrichtung zumindest teilweise in Dampfform vorliegt, insbesondere erzeugt aus Kesselspeisewasser.

Gemäß einem Ausführungsbeispiel ist ein/der das Kühlmedium bereitstellender Mitteldruckdampferzeuger der Kühlungsanordnung mit einem Primärreformer der Ammoniakanlage verbindbar/verbunden. Hierdurch ergeben sich zuvor genannte Vorteile.

Gemäß einem Ausführungsbeispiel ist ein/der das Kühlmedium bereitstellender Mitteldruckdampferzeuger der Kühlungsanordnung an einen Prozesskondensatstripper der Ammoniakanlage koppelbar/gekoppelt. Dies liefert zuvor genannte Vorteile

Gemäß einem Ausführungsbeispiel ist ein/der das Kühlmedium bereitstellender Mitteldruckdampferzeuger der Kühlungsanordnung an einen Kondensatbehälter der Ammoniakanlage koppelbar/gekoppelt, insbesondere mittels einer Entspannngsleitung für entspanntes Kühlmedium oder Kühlmedium zur Entspannung. Hierdurch lässt sich Niederdruckdampf bereitstellen. Dies liefert zuvor genannte Vorteile.

Gemäß einem Ausführungsbeispiel weist die Wärmetauschereinrichtung wenigstens zwei Auslässe umfassend einen Auslass zum/zu einem Prozesskondensatstripper der Ammoniakanlage und einen Auslass zum/zu einem Kondensatbehälter der Ammoniakanlage auf. Dies liefert zuvor genannte Vorteile.

Gemäß der Erfindung weist die Kühlungsanordnung wenigstens zwei Ableitungen umfassend eine Ableitung für das Kühlmedium zum/zu einem Prozesskondensatstripper der Ammoniakanlage und umfassend eine Ableitung für das Kühlmedium zum/zu einem Kondensatbehälter der Ammoniakanlage auf. Hierdurch lässt sich der Mitteldruckdampf auf unterschiedliche Weise stromab nach erfolgtem Wärmeaustausch nutzen, insbesondere zumindest im Prozesskondensatstripper und zur Bereitstellung von Niederdruckdampf.

Gemäß einem Ausführungsbeispiel weist die Wärmetauschereinrichtung wenigstens ein vertikal ausgerichtetes Rohrbündel auf. Hierdurch kann eine Phasentrennung auf effektive Weise erfolgen.

Es hat sich gezeigt, dass die Erzeugung von Dampf innerhalb der Wärmetauschereinrichtung diverse Vorteile liefert. Insbesondere kann auf eine Druckreduzierung (Drosselungsverdampfung) verzichtet werden. Auch können starke Druckschwankungen vermieden werden. Mechanische Beanspruchungen bei einer Drosselung können vermieden werden. Die Pumpenleistung der Kesselspeisewasserpumpe kann genutzt werden, und der Dampf kann auf vergleichsweise hohem Druckniveau bereitgestellt werden, so dass der Dampf auch noch weiterverwendet werden kann, insbesondere in einer Niederdruck-Anordnung der Anlage (üblicherweise mindestens 4 bar absolut).

Die zuvor genannte Aufgabe wird erfindungsgemäß auch gelöst durch eine Zweidruckniveau-Ammoniakanlage mit einem ersten Syntheseabschnitt umfassend wenigstens einen OT-Reaktor, insbesondere wenigstens zwei OT-Reaktoren, und mit einem zweiten Syntheseabschnitt mit mehreren Loop-Reaktoren und mit wenigstens einer zuvor beschriebenen Synthesegas-Kühlungsanordnung. Hierdurch ergeben sich zuvor genannte Vorteile.

Die zuvor genannte Aufgabe wird erfindungsgemäß auch gelöst durch Verwendung eines Mitteldruckdampferzeugers zum Bereitstellen von Mitteldrucksattdampf zum Kühlen von Synthesegas stromab von einem OT-Reaktor, insbesondere zwischen wenigstens zwei OT-Reaktoren, eines Syntheseabschnitts mit relativ niedrigerem Hochdruckniveau einer Zweidruckniveau-Ammoniakanlage, insbesondere in einer zuvor beschriebenen Synthesegas-Kühlungsanordnung, insbesondere bei einem Druck kleiner 80 oder 75 Prozent des relativ niedrigeren Hochdruckniveaus des Syntheseabschnittes. Hierdurch ergeben sich zuvor genannte Vorteile.

Die zuvor genannte Aufgabe wird auch gelöst durch Verwendung eines Mitteldruckdampferzeugers zum Bereitstellen von Mitteldrucksattdampf an einem Prozesskondensatstripper einer Zweidruckniveau-Ammoniakanlage, insbesondere in einer zuvor beschriebenen Synthesegas-Kühlungsanordnung, insbesondere für Mitteldruckdampf mit einem Druck kleiner 80 oder 75 Prozent eines relativ niedrigeren Hochdruckniveaus der Zweidruckniveau-Ammoniakanlage. Hierdurch ergeben sich zuvor genannte Vorteile.

Die zuvor genannte Aufgabe wird auch gelöst durch Verwendung eines mit Kesselspeisewasser gespeisten Mitteldruckdampferzeugers umfassend wenigstens eine Zweiphasen-Wärmetauschereinrichtung zwischen wenigstens zwei OT-Reaktoren eines Syntheseabschnitts mit relativ niedrigerem Hochdruckniveau einer Zweidruckniveau-Ammoniakanlage, zum Kühlen von Synthesegas zwischen den OT-Reaktoren, insbesondere in einer zuvor beschriebenen Synthesegas-Kühlungsanordnung. Hierdurch ergeben sich zuvor genannte Vorteile.

Die zuvor genannte Aufgabe wird auch gelöst durch Verwendung von zur Kühlung von Synthesegas zwischen wenigstens zwei OT-Reaktoren eines Syntheseabschnitts mit relativ niedrigerem Hochdruckniveau einer Zweidruckniveau-Ammoniakanlage genutztem Mitteldruckdampf als Prozessdampf in einem Primärreformer der Zweidruckniveau-Ammoniakanlage, insbesondere in einer zuvor beschriebenen Synthesegas-Kühlungsanordnung. Hierdurch ergeben sich zuvor genannte Vorteile.

Die zuvor genannte Aufgabe wird erfindungsgemäß auch gelöst durch Verwendung einer Zweiphasen-Wärmetauschereinrichtung als Mitteldruckdampferzeuger stromab von einem ersten OT-Reaktor eines Syntheseabschnitts mit relativ niedrigerem Hochdruckniveau einer Zweidruckniveau-Ammoniakanlage, zum Bereitstellen von Kühlmedium auf einem Druckniveau unter dem Hochdruckniveau des Syntheseabschnitts, insbesondere zum Erweitern der Ammoniakanlage um wenigstens einen weiteren OT-Reaktor stromab von der Wärmetauschereinrichtung. Hierdurch ergeben sich zuvor genannte Vorteile.

### FIGURENBESCHREIBUNG

Weitere Merkmale und Vorteile der Erfindung ergeben sich aus der Beschreibung wenigstens eines Ausführungsbeispiels anhand von Zeichnungen, sowie aus den Zeichnungen selbst. Dabei zeigt
- Fig. 1: in schematischer Darstellung die Konfiguration einer Zweidruckniveau-Ammoniakanlage,
- Fig. 2: in schematischer Darstellung die Konfiguration einer Synthesegas-Kühlungsanordnung gemäß einem Ausführungsbeispiel, im Zusammenhang mit einer Zweidruckniveau-Ammoniakanlage.

Bei Bezugszeichen, die nicht explizit in Bezug auf eine einzelne Figur beschrieben werden, wird auf die anderen Figuren verwiesen. Gleiche Bezugszeichen kennzeichnen gleiche Komponenten.

### DETAILLIERTE BESCHREIBUNG DER FIGUREN

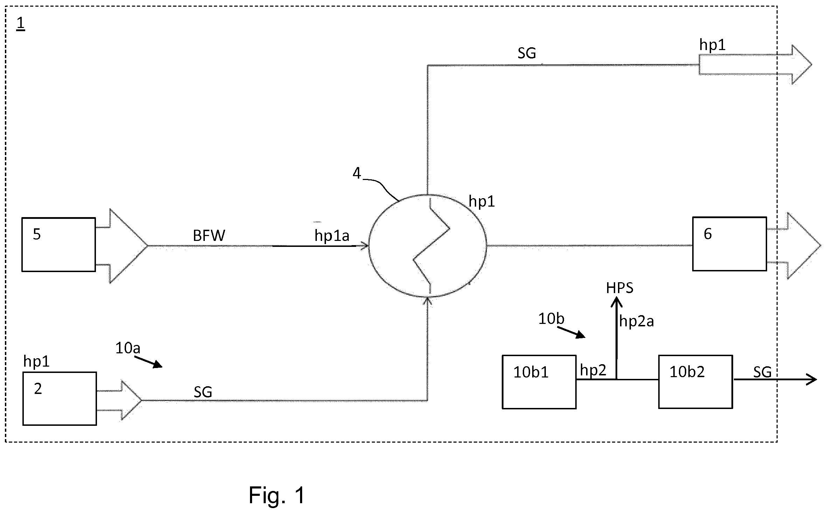

Die Fig. 1 zeigt eine Zweidruckniveau-Ammoniakanlage 1 mit zwei Syntheseabschnitten, nämlich einem ersten, im Durchlauf betriebenen Syntheseabschnitt 10a auf einem ersten Hochdruckniveau hp1 von etwa 100bar und einem zweiten, im Kreislauf betriebenen Syntheseabschnitt 10b auf einem zweitem Hochdruckniveau hp2 von etwa 200bar. Im ersten Syntheseabschnitt 10a ist ein OT-Reaktor 2 angeordnet, und im zweiten Syntheseabschnitt 10b sind ein erster Loop-Reaktor 10b1 und ein zweiter Loop-Reaktor 10b2 angeordnet.

Stromab vom OT-Reaktor 2 ist ein hochdruckbetriebener Kesselspeisewasser-Vorwärmer 4 angeordnet, welcher einen Wärmetausch mit Synthesegas SG ermöglicht, und auf einem Wärmetauscher-Druckniveau hp1a von ca. 140bar betrieben wird. Das Kesselspeisewasser BFW kann mittels einer Speisewasserpumpe 5 bereitgestellt werden, und nach erfolgtem Wärmetausch kann das vorgewärmte Kesselspeisewasser BFW in eine Hochdruck-Dampftrommel 6 weitergeleitet werden.

Der hochdruckbetriebene Vorwärmer 4 ist ein Wärmetauscher ohne Phasenwechsel. Der Vorwärmer 4 ist als horizontaler ("liegender") Wärmetauscher ausgebildet. Bei dieser Anordnung kann eine Förderhöhe für eine Kesselspeisewasserpumpe gering gehalten werden, und somit Energie einspart werden.

Der OT-Syntheseabschnitt 10a ist prozesstechnisch stromauf vom Synthesekreislauf 10b angeordnet. Zwischen den Syntheseabschnitten ist eine Abkühlstrecke vorgesehen, um in der OT-Synthese produziertes Ammoniak aus dem Synthesegas zu kondensieren. In einer OT-Abscheideflasche kann das produzierte Ammoniak vom Synthesegas abgeschieden werden. Mittels eines Synthesegasverdichters kann der Druck vom relativ niedrigeren Hochdruckniveau der OT-Synthese auf das relativ höhere Hochdruckniveau des Synthesekreislaufs 10b angehoben werden.

In den Figuren werden folgende Abkürzungen verwendet: Mitteldruck mp, Niederdruck Ip, Synthesegas SG, Kesselspeisewasser (engl. boiler feed water) BFW, Hochdruckdampf HPS, Mitteldruckdampf MPS, Niederdruckdampf LPS.

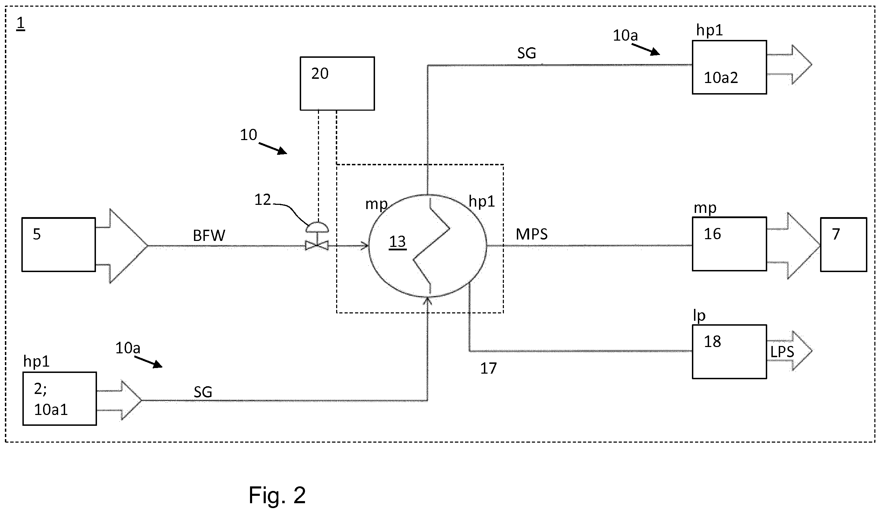

Die Fig. 2 zeigt eine Synthesegas-Kühlungsanordnung 10 mit zwei Syntheseabschnitten, von welchen nur der erste Syntheseabschnitt 10a auf erstem Hochdruckniveau dargestellt ist. Der erste Syntheseabschnitt 10a umfasst einen ersten OT-Reaktor 10a1 und wenigstens einen weiteren OT-Reaktor 10a2, zwischen welchen OT-Reaktoren eine Mitteldruckdampferzeugereinrichtung 13 mit Wärmetauschereinrichtung angeordnet ist. Stromauf von der Mitteldruckdampferzeugereinrichtung 13 ist eine Durchlassarmatur 12, insbesondere mit einer Drossel oder einer Ventileinheit angeordnet.

Die Mitteldruckdampferzeugereinrichtung 13 wird von einer Pumpe 5 mit Kesselspeisewasser gespeist. Die Mitteldruckdampferzeugereinrichtung 13 ist an einen Prozesskondensatstripper 16 und/oder an einen Primärreformer 7 gekoppelt. Ferner ist die Mitteldruckdampferzeugereinrichtung 13 über eine Entspannungsleitung bzw. einen Entspannungspfad 17, insbesondere in Form einer Abschlämmleitung (blow down), an einen Kondensatbehälter 18 gekoppelt.

Mittels einer an die Durchlassarmatur 12 und/oder an die Mitteldruckdampferzeugereinrichtung 13 gekoppelten Logikeinheit 20 kann eine Druck- und Durchflussüberwachung und -regelung erfolgen. Anders ausgedrückt: Die Logikeinheit 20 steht optional in Verbindung mit dem Ventil 12, welches als Aktuator für die Regelung des Druckes am Eintritt der Wärmetauschereinrichtung bzw. des Dampferzeugers 13 betrieben werden kann.

Im Vergleich zur Fig. 1 sind zwei Leitungen stromab der Mitteldruckdampferzeugereinrichtung 13 vorgesehen, die zum Prozesskondensatstripper 16 und zum Kondensatbehälter 18 führen. Im in Fig. 1 gezeigten BFW-Vorwärmer 4 hingegen wird kein Dampf erzeugt. Eine Abschlämmung ist nicht erforderlich.

Im Gegensatz zu einem hochdruckbetriebenen Vorwärmer 4, in welchem kein Phasenwechsel stattfindet, weist der Mitteldruckdampferzeuger 13 bzw. der Dampferzeuger-Wärmetauscher also zwei Bereiche jeweils für eine flüssige und eine gasförmige Phase auf. Der Mitteldruckdampferzeuger kann als vertikale ("stehende") Wärmetauschereinrichtung ausgebildet sein, bei welchem das Rohrbündel und der umgebende Druckbehälter in vertikaler Richtung ausgerichtet sind. Hierdurch kann insbesondere bei großer Bauhöhe auf effektive Weise eine Phasentrennung erfolgen, insbesondere aufgrund spezifischer Dichteunterschiede zwischen Dampf und Kesselspeisewasser sowie aufgrund von Gravitationskräften. Dampf am Austritt kann dadurch in hinreichend trockener Form bereitgestellt werden. Ein zusätzlicher Flüssigkeitsabscheider ist nicht erforderlich.

### Bezugszeichenliste:

- 1: Zweidruckniveau-Ammoniakanlage
- 2: OT-Reaktor
- 4: hochdruckbetriebener Vorwärmer (BFW-Vorwärmer)
- 5: Speisewasserpumpe
- 6: Hochdruck-Dampftrommel
- 7: Primärreformer

- 10: Synthesegas-Kühlungsanordnung
- 10a: erster Syntheseabschnitt auf erstem Hochdruckniveau
- 10a1: erster OT-Reaktor
- 10a2: weiterer, insbesondere zweiter OT-Reaktor
- 10b: zweiter Syntheseabschnitt auf zweitem Hochdruckniveau
- 10b1: erster Loop-Reaktor
- 10b2: zweiter Loop-Reaktor
- 12: Durchlassarmatur, insbesondere Drossel oder Ventileinheit
- 13: Mitteldruckdampferzeugereinrichtung, insbesondere mit Wärmetauschereinrichtung
- 16: Prozesskondensatstripper, insbesondere Mitteldruckkondensatstripper
- 17: Entspannungsleitung bzw. Entspannungspfad, insbesondere Abschlämmleitung (blow down)
- 18: Kondensatbehälter (condensate drum)
- 20: Logikeinheit

- hp1: erstes Hochdruckniveau, insbesondere ca. 100 bar im ersten Syntheseabschnitt
- hp2: zweites Hochdruckniveau, insbesondere ca. 200 bar im zweiten Syntheseabschnitt
- hp1a: Wärmetauscher-Druckniveau bzw. BFW-Druck im ersten Syntheseabschnitt
- hp2a: Druckniveau von Hochdruckdampf im zweiten Syntheseabschnitt

- mp: Mitteldruck
- Ip: Niederdruck
- SG: Synthesegas
- BFW: Kesselspeisewasser (engl. boiler feed water BFW)
- HPS: Hochdruckdampf
- MPS: Mitteldruckdampf, insbesondere gesättigter Mitteldruckdampf
- LPS: Niederdruckdampf bzw. entspannter Dampf

## Patentansprüche

1. Verfahren zum Herstellen von Synthesegas (SG) in einer Zweidruckniveau-Ammoniakanlage (1) mit einem ersten im Durchlauf betriebenen Syntheseabschnitt (10a) auf einem ersten, relativ niedrigeren Hochdruckniveau (hp1) und mit einem zweiten im Kreislauf betriebenen Syntheseabschnitt (10b) auf einem zweiten relativ höheren Hochdruckniveau (hp2),
**dadurch gekennzeichnet, dass** das Synthesegas im ersten Syntheseabschnitt stromab von einem Once Through (OT)- Reaktor (10a1) des ersten Syntheseabschnittes mittels Kühlmedium auf einem Druckniveau unterhalb des ersten Hochdruckniveaus gekühlt wird, insbesondere auf einem Druckniveau im Bereich von 50 bis 75 bar, wobei das Kühlmedium mittels eines Mitteldruckdampferzeugers (13) auf einem Druckniveau unterhalb des ersten Hochdruckniveaus bereitgestellt wird, oder wobei das Kühlen mittels des Mitteldruckdampferzeugers erfolgt.

2. Verfahren nach dem vorhergehenden Verfahrensanspruch, wobei das Kühlmedium als Dampf bereitgestellt wird, insbesondere erzeugt aus Kesselspeisewasser.

3. Verfahren nach einem der vorhergehenden Verfahrensansprüche, wobei das Synthesegas im ersten Syntheseabschnitt nach dem Kühlen zu wenigstens einem weiteren OT-Reaktor (10a2) des ersten Syntheseabschnittes geleitet wird.

4. Verfahren nach einem der vorhergehenden Verfahrensansprüche, wobei das Kühlmedium an oder mittels des Mitteldruckdampferzeugers (13) umfassend wenigstens eine Zweiphasen-Wärmetauschereinrichtung bereitgestellt wird, welche stromauf vom/von einem weiteren OT-Reaktor (10a2) von Synthesegas (SG) durchströmt wird, insbesondere Kühlmedium erzeugt aus Kesselspeisewasser (BFW); und/oder wobei mittels des Mitteldruckdampferzeugers aus Kesselspeisewasser Dampf erzeugt wird, indem während der Kühlung von Synthesegas im Mitteldruckdampferzeuger Wärme auf das Kesselspeisewasser übertragen wird.

5. Verfahren nach einem der vorhergehenden Verfahrensansprüche, wobei das Kühlmedium nach erfolgtem Wärmetausch am Synthesegas zu einem Prozesskondensatstripper (16) der Ammoniakanlage (1) geleitet wird; und/oder wobei das Kühlmedium nach erfolgtem Wärmetausch am Synthesegas zu einem Primärreformer (7) der Ammoniakanlage (1) geleitet wird.

6. Verfahren nach einem der vorhergehenden Verfahrensansprüche, wobei entspanntes Kühlmedium oder Kühlmedium zur Entspannung aus dem ersten Syntheseabschnitt (10a) zu einem Kondensatbehälter (18) der Ammoniakanlage (1) abgeleitet wird, insbesondere stromab vom/von einem Mittedruckdampferzeuger (13).

7. Synthesegas-Kühlungsanordnung (10) eingerichtet zur Wärmeabfuhr aus Synthesegas (SG) in einem ersten von zwei Syntheseabschnitten (10a, 10b) mit relativ niedrigerem Hochdruckniveau einer Zweidruckniveau-Ammoniakanlage (1), insbesondere eingerichtet zum Durchführen eines Verfahrens nach einem der vorhergehenden Verfahrensansprüche,
**dadurch gekennzeichnet, dass** die Kühlungsanordnung (10) eingerichtet ist zum Bereitstellen von Kühlmedium auf einem Druckniveau unterhalb des Hochdruckniveaus des ersten Syntheseabschnittes (10a), insbesondere bei einem Druck kleiner 80 oder 75 Prozent des Hochdruckniveaus des ersten Syntheseabschnittes, wobei die Synthesegas-Kühlungsanordnung (10) einen Mitteldruckdampferzeuger (13) eingerichtet zum Bereitstellen des Kühlmediums auf dem Druckniveau unterhalb des Hochdruckniveaus des ersten Syntheseabschnittes (10a) umfasst, wobei die Synthesegas-Kühlungsanordnung (10) wenigstens zwei Ableitungen umfassend eine Ableitung für das Kühlmedium zu einem Prozesskondensatstripper der Ammoniakanlage und umfassend eine Ableitung für das Kühlmedium zu einem Kondensatbehälter der Ammoniakanlage aufweist.

8. Synthesegas-Kühlungsanordnung nach dem vorhergehenden Vorrichtungsanspruch, wobei die Kühlungsanordnung (10) eingerichtet ist zum Bereitstellen des Kühlmediums in Dampfform.

9. Synthesegas-Kühlungsanordnung nach einem der vorhergehenden Vorrichtungsansprüche, wobei die Kühlungsanordnung (10) eingerichtet ist zum Bereitstellen des Kühlmediums stromab von einem ersten OT-Reaktor (10a1) des ersten Syntheseabschnittes (10a) und stromauf von einem zweiten OT-Reaktor (10a1, 10a2) des ersten Syntheseabschnittes (10a).

10. Synthesegas-Kühlungsanordnung nach einem der vorhergehenden Vorrichtungsansprüche, wobei die Synthesegas-Kühlungsanordnung (10) den Mitteldruckdampferzeuger (13) umfassend wenigstens eine Zweiphasen-Wärmetauschereinrichtung umfasst.

11. Synthesegas-Kühlungsanordnung nach einem der vorhergehenden Vorrichtungsansprüche, wobei der das Kühlmedium bereitstellende Mitteldruckdampferzeuger (13) der Kühlungsanordnung (10) mit einem Primärreformer der Ammoniakanlage (1) verbindbar ist; und/oder wobei der das Kühlmedium bereitstellende Mitteldruckdampferzeuger (13) der Kühlungsanordnung an einen Prozesskondensatstripper (16) der Ammoniakanlage koppelbar/gekoppelt ist.

12. Zweidruckniveau-Ammoniakanlage (1) mit einem ersten Syntheseabschnitt (10a) umfassend wenigstens einen OT-Reaktor (10a1, 10a2) und mit einem zweiten Syntheseabschnitt (10b) mit mehreren Loop-Reaktoren (10b1, 10b2) und mit wenigstens einer Synthesegas-Kühlungsanordnung (10) nach einem der vorhergehenden Vorrichtungsansprüche.

13. Verwendung eines Mitteldruckdampferzeugers (13) zum Bereitstellen von Mitteldrucksattdampf (MPS) zum Kühlen von Synthesegas (SG) stromab von einem OT-Reaktor, insbesondere zwischen wenigstens zwei OT-Reaktoren (10a1, 10a2), eines Syntheseabschnitts (10a) mit relativ niedrigerem Hochdruckniveau einer Zweidruckniveau-Ammoniakanlage (1), insbesondere in einer Synthesegas-Kühlungsanordnung (10) nach einem der vorhergehenden Ansprüche, insbesondere bei einem Druck kleiner 80 oder 75 Prozent des relativ niedrigeren Hochdruckniveaus des Syntheseabschnittes (10a) .

14. Verwendung einer Zweiphasen-Wärmetauschereinrichtung als Mitteldruckdampferzeuger (13) stromab von einem ersten OT-Reaktor (10a1) eines Syntheseabschnitts (10a) mit relativ niedrigerem Hochdruckniveau einer Zweidruckniveau-Ammoniakanlage (1), zum Bereitstellen von Kühlmedium auf einem Druckniveau unter dem Hochdruckniveau des Syntheseabschnitts (10a), insbesondere zum Erweitern der Ammoniakanlage (1) um wenigstens einen weiteren OT-Reaktor (10a2) stromab von der Zweiphasen-Wärmetauschereinrichtung.

## Claims

1. A process for producing synthesis gas (SG) in a dual pressure level ammonia plant (1) having a first synthesis section (10a) operated in once through fashion at a first relatively lower high pressure level (hp1) and having a second synthesis section (10b) operated in recirculating fashion at a second relatively higher high pressure level (hp2), **characterized in that** in the first synthesis section downstream of an OT reactor (10a1) of the first synthesis section the synthesis gas is cooled using cooling medium at a pressure level below the first high pressure level, in particular at a pressure level in the range from 50 to 75 bar, wherein the cooling medium is provided by means of a medium pressure steam generator (13) at a pressure level below the first high pressure level or wherein the cooling is effected by means of the medium pressure steam generator.

2. The process as claimed in the preceding process claim, wherein the cooling medium is provided as steam, in particular generated from boiler feed water.

3. The process as claimed in either of the preceding process claims, wherein in the first synthesis section the synthesis gas is passed to at least one further OT reactor (10a2) of the first synthesis section after cooling.

4. The process as claimed in any of the preceding process claims, wherein the cooling medium is provided at or by means of the medium pressure steam generator (13) comprising at least one dual phase heat exchanger means which is traversed by synthesis gas (SG) upstream of the/of a further OT reactor (10a2), in particular cooling medium generated from boiler feed water (BFW), and/or wherein steam is generated from boiler feed water by means of the medium pressure steam generator when during the cooling of synthesis gas in the medium pressure steam generator heat is transferred to the boiler feed water.

5. The process as claimed in any of the preceding process claims, wherein the cooling medium is passed to a process condensate stripper (16) of the ammonia plant (1) once heat exchange with the synthesis gas has been effected and/or wherein the cooling medium is passed to a primary reformer (7) of the ammonia plant (1) once heat exchange with the synthesis gas has been effected.

6. The process as claimed in any of the preceding process claims, wherein decompressed cooling medium or cooling medium for decompression is diverted from the first synthesis section (10a) to a condensate drum (18) of the ammonia plant (1), in particular downstream of the/of a medium pressure steam generator (13).

7. A synthesis gas cooling assembly (10) for heat removal from synthesis gas (SG) in a first of two synthesis sections (10a, 10b) having a relatively lower high pressure level of a dual pressure level ammonia plant (1), in particular adapted for performing a process according to any of the preceding process claims,
**characterized in that** the cooling assembly (10) is adapted for providing cooling medium at a pressure level below the high pressure level of the first synthesis section (10a), in particular at a pressure of less than 80 or 75 percent of the high pressure level of the first synthesis section, wherein the synthesis gas cooling arrangement (10) comprises a medium pressure steam generator (13) for providing the cooling medium at the pressure level below the high pressure level of the first synthesis section (10a), wherein the synthesis gas cooling assembly (10) comprises at least two discharge conduits comprising one discharge conduit for the cooling medium to a process condensate stripper of the ammonia plant and comprising one discharge conduit for the cooling medium to a condensate drum of the ammonia plant.

8. The synthesis gas cooling assembly as claimed in the preceding apparatus claim, wherein the cooling arrangement (10) is adapted for providing the cooling medium in vaporous form.

9. The synthesis gas cooling assembly as claimed in either of the preceding apparatus claims, wherein the cooling arrangement (10) is adapted for providing the cooling medium downstream of a first OT reactor (10a1) of the first synthesis section (10a) and upstream of a second OT reactor (10a1, 10a2) of the first synthesis section (10a).

10. The synthesis gas cooling assembly as claimed in any of the preceding apparatus claims, wherein the synthesis gas cooling arrangement (10) comprises the medium pressure steam generator (13) comprising at least one dual phase heat exchanger means.

11. The synthesis gas cooling assembly as claimed in any of the preceding apparatus claims, wherein the medium pressure steam generator (13) of the cooling assembly (10) which provides the cooling medium is connectable to a primary reformer of the ammonia plant (1); and/or wherein the medium pressure steam generator (13) of the cooling assembly which provides the cooling medium is couplable/coupled to a process condensate stripper (16) of the ammonia plant.

12. A dual pressure level ammonia plant (1) having a first synthesis section (10a) comprising at least one OT reactor (10a1, 10a2) and having a second synthesis section (10b) having a plurality of loop reactors (10b1, 10b2) and having at least one synthesis gas cooling assembly (10) as claimed in any of the preceding apparatus claims.

13. The use of a medium pressure steam generator (13) for providing medium pressure saturated steam (MPS) for cooling of synthesis gas (SG) downstream of an OT reactor, in particular between at least two OT reactors (10a1, 10a2), of a synthesis section (10a) having a relatively lower high pressure level of a dual pressure level ammonia plant (1), in particular in a synthesis gas cooling assembly (10) as claimed in any of the preceding claims, in particular at a pressure of less than 80 or 75 percent of the relatively lower high pressure level of the synthesis section (10a).

14. The use of a dual phase heat exchanger means as a medium pressure steam generator (13) downstream of a first OT reactor (10a1) of a synthesis section (10a) having a relatively lower high pressure level of a dual pressure level ammonia plant (1) for providing cooling medium at a pressure level below the high pressure level of the synthesis section (10a), in particular for expanding the ammonia plant (1) by at least one further OT reactor (10a2) downstream of the dual phase heat exchanger means.

## Revendications

1. Procédé de production de gaz de synthèse (SG) dans une installation d'ammoniac à deux niveaux de pression (1) comprenant une première portion de synthèse (10a) fonctionnant en flux continu à un premier niveau à haute pression (hp1) relativement bas et une deuxième portion de synthèse (10b) fonctionnant en circuit fermé à un deuxième niveau de pression (hp2) relativement élevé,
**caractérisé en ce que** le gaz de synthèse de la première portion de synthèse, en aval d'un réacteur à passage unique (OT) (10a1) de la première portion de synthèse, est refroidi au moyen d'un milieu de refroidissement à un niveau de pression inférieur au premier niveau de haute pression, en particulier à un niveau de pression compris entre 50 et 75 bars, le milieu de refroidissement étant produit au moyen d'un générateur de vapeur à moyenne pression (13) à un niveau de pression inférieur au premier niveau à haute pression, ou le refroidissement étant effectué au moyen du générateur de vapeur à moyenne pression.

2. Procédé selon la revendication de procédé précédente, le milieu de refroidissement étant produit sous forme de vapeur, en particulier générée à partir de l'eau d'alimentation de chaudière.

3. Procédé selon l'une des revendications de procédé précédentes, le gaz de synthèse de la première portion de synthèse après refroidissement étant acheminé vers au moins un autre réacteur 0T (10a2) de la première portion de synthèse.

4. Procédé selon l'une des revendications de procédé précédentes, le milieu de refroidissement étant produit au niveau ou au moyen du générateur de vapeur à moyenne pression (13) comprenant au moins un dispositif échangeur de chaleur à deux phases qui est traversé en amont par du gaz de synthèse (SG) provenant du/d'un autre réacteur 0T (10a2), en particulier du milieu de refroidissement généré à partir de l'eau d'alimentation de chaudière (BFW); et/ou de la vapeur étant générée à partir de l'eau d'alimentation de chaudière au moyen du générateur de vapeur à moyenne pression par transfert de chaleur à l'eau d'alimentation de chaudière pendant le refroidissement du gaz de synthèse dans le générateur de vapeur à moyenne pression.

5. Procédé selon l'une des revendications de procédé précédentes, le milieu de refroidissement étant amené à un extracteur de condensat de processus (16) de l'installation d'ammoniac (1) après que l'échange de chaleur au niveau du gaz de synthèse a été effectué ; et/ou le milieu de refroidissement étant acheminé vers un reformeur primaire (7) de l'installation d'ammoniac (1) après que l'échange de chaleur au niveau du gaz de synthèse a été effectué.

6. Procédé selon l'une des revendications de procédé précédentes, le milieu de refroidissement détendu ou le milieu de refroidissement à détendre étant dévié de la première portion de synthèse (10a) vers un réservoir de condensat (18) de l'installation d'ammoniac (1), en particulier en aval du/d'un générateur de vapeur à moyenne pression (13).

7. Dispositif de refroidissement de gaz de synthèse (10) conçu pour dissiper de la chaleur du gaz de synthèse (SG) dans une première des deux portions de synthèse (10a, 10b), dont le niveau de pression est relativement bas, d'une installation d'ammoniac à deux niveaux de pression (1), en particulier conçu pour mettre en œuvre un procédé selon l'une des revendications de procédé précédentes,
**caractérisé en ce que** le dispositif de refroidissement (10) est conçu pour produire un milieu de refroidissement à un niveau de pression inférieur au niveau de haute pression de la première portion de synthèse (10a), en particulier à une pression inférieure à 80 ou 75 % du niveau de haute pression de la première portion de synthèse, le dispositif de refroidissement de gaz de synthèse (10) comprenant un générateur de vapeur à moyenne pression (13) conçu pour produire le milieu de refroidissement au niveau de pression inférieur au niveau de haute pression de la première portion de synthèse (10a), le dispositif de refroidissement de gaz de synthèse (10) comportant au moins deux conduites de dérivation comprenant une conduite de dérivation du milieu de refroidissement vers un extracteur de condensat de processus de l'installation d'ammoniac et comprenant une conduite de dérivation du milieu de refroidissement vers un réservoir de condensat de l'installation d'ammoniac.

8. Dispositif de refroidissement de gaz de synthèse selon la revendication de dispositif précédente, le dispositif de refroidissement (10) étant conçu pour produire le milieu de refroidissement sous forme de vapeur.

9. Dispositif de refroidissement de gaz de synthèse selon l'une des revendications de dispositif précédentes, le dispositif de refroidissement (10) étant conçu pour produire le milieu de refroidissement en aval d'un premier réacteur 0T (10a1) de la première portion de synthèse (10a) et en amont d'un deuxième réacteur 0T (10a1, 10a2) de la première portion de synthèse (10a).

10. Dispositif de refroidissement de gaz de synthèse selon l'une des revendications précédentes du dispositif, le dispositif de refroidissement de gaz de synthèse (10) comprenant le générateur de vapeur à moyenne pression (13) comprenant au moins un dispositif échangeur de chaleur à deux phases.

11. Dispositif de refroidissement de gaz de synthèse selon l'une des revendications de dispositif précédentes, le générateur de vapeur à moyenne pression (13) du dispositif de refroidissement (10), qui produit le milieu de refroidissement, pouvant être relié à un reformeur primaire de l'installation d'ammoniac (1) ; et/ou le générateur de vapeur à moyenne pression (13) du dispositif de refroidissement, qui produit le milieu de refroidissement, étant/pouvant être couplé à un extracteur de condensat de processus (16) du système d'ammoniac.

12. Installation d'ammoniac à deux niveaux de pression (1) pourvue d'une première portion de synthèse (10a) comprenant au moins un réacteur 0T (10a1, 10a2) et d'une deuxième portion de synthèse (10b) comprenant plusieurs réacteurs en boucle (10b1, 10b2) et au moins un dispositif de refroidissement de gaz de synthèse (10) selon l'une des revendications de dispositif précédentes.

13. Utilisation d'un générateur de vapeur à moyenne pression (13) pour produire de la vapeur saturée à moyenne pression (MPS) destinée à refroidir un gaz de synthèse (SG) en aval d'un réacteur 0T, en particulier entre au moins deux réacteurs 0T (10a1, 10a2), d'une portion de synthèse (10a), dont le niveau de haute pression est relativement faible, d'un système d'ammoniac à deux niveaux de pression (1), en particulier dans un dispositif de refroidissement de gaz de synthèse (10) selon l'une des revendications précédentes, en particulier à une pression inférieure à 80 ou 75 % du niveau de pression relativement faible de la portion de synthèse (10a).

14. Utilisation d'un dispositif échangeur de chaleur à deux phases comme générateur de vapeur à moyenne pression (13) en aval d'un premier réacteur 0T (10a1) d'une portion de synthèse (10a), dont le niveau de haute pression est relativement bas, d'une installation d'ammoniac à deux niveaux de pression (1), pour produire un milieu de refroidissement à un niveau de pression inférieur au niveau de haute pression de la portion de synthèse (10a), en particulier pour étendre l'installation d'ammoniac (1) avec au moins un autre réacteur 0T (10a2) en aval du dispositif échangeur de chaleur à deux phases.
